# EUROPÄISCHE PATENTSCHRIFT

(11) **EP 2 825 124 B1**
(45) Veröffentlichungstag und Bekanntmachung des Hinweises auf die Patenterteilung: **01.02.2017**
(21) Anmeldenummer: 13716161.8
(22) Anmeldetag: 12.03.2013
(51) Int. Cl.: A61C 8/00

(54) **AUFSATZ FÜR EIN KORRESPONDIERENDES STIFTFÖRMIGES ZAHNIMPLANTAT**
ATTACHMENT FOR A CORRESPONDING PIN-SHAPED TOOTH IMPLANT
PILIER POUR IMPLANT DENTAIRE EN FORME DE BROCHE CORRESPONDANT

(30) Priorität: 14.03.2012 AT 3102012
(43) Veröffentlichungstag der Anmeldung: 21.01.2015
(73) Patentinhaber: Kern, Mario, 6233 Kramsach (AT)
(72) Erfinder: Kern, Mario, 6233 Kramsach (AT)
(74) Vertreter: Torggler & Hofinger Patentanwälte
(86) Internationale Anmeldenummer: PCT/AT2013/000045
(87) Internationale Veröffentlichungsnummer: WO 2013/134800

(56) Entgegenhaltungen:
- WO-A2-01/49199
- US-A1- 2002 004 189
- US-A1- 2003 031 981
- US-A1- 2010 159 419
- US-A1- 2010 304 334

## Beschreibung

Die vorliegende Erfindung betrifft einen Aufsatz für ein korrespondierendes stiftförmiges Zahnimplantat mit den Merkmalen des Oberbegriffs des Anspruchs 1, eine Anordnung mit einem stiftförmigen Zahnimplantat und einem solchen Aufsatz sowie ein Verfahren zum anatomischen Anpassen eines solchen Aufsatzes.

Gattungsgemäße Aufsatze dienen der Befestigung einer meist aus keramischem Material bestehenden Mesostruktur an einem im Kieferknochen eines Patienten angeordneten Zahnimplantat. Die Anordnung aus Aufsatz und Mesostruktur wird Abutment genannt.

Zu jedem Aufsatz gibt es ein korrespondierendes stiftförmiges Zahnimplantat, wobei ein bestimmter Aufsatz aufgrund der Dimensionierungen des Verbindungsstiftes und der korrespondierenden Blindbohrung des stiftförmigen Zahnimplantats nur für das korrespondierende stiftförmige Zahnimplantat geeignet ist. Dies wird üblicherweise durch eine entsprechende am Aufsatz angeordnete Markierung oder Codierung (z. B. eine Beschriftung oder Farbcodierung) oder eine entsprechende sinnfällige Herrichtung der Verpackung des Aufsatzes angezeigt. Es gibt zwar auch stiftförmige Zahnimplantate mit unterschiedlichen Außendurchmessern, die jeweils eine Blindbohrung mit identischen Abmessungen aufweisen können, sodass ein Aufsatz für alle stiftförmigen Zahnimplantate mit dieser Blindbohrung verwendbar ist. In diesem Fall bilden die stiftförmigen Zahnimplantate mit der gleichen Blindbohrung allerdings eine Äquivalenzklasse und der Aufsatz ist nur hinsichtlich dieser Äquivalenzklasse einsetzbar.

Ist der Aufsatz mit dem stiftförmigen Zahnimplantat verbunden, so ist die Plattform als jener Teil des Aufsatzes definiert, der sich an den Verbindungsstift des Aufsatzes anschließt und (vertikal) über die Implantatschulter übersteht.

Bekannte Aufsatze weisen eine Plattform auf, die plan, das heißt ungewölbt, ausgebildet ist. Es ist auch bereits ein Aufsatz mit einer Plattform bekannt (US 2003/0031981 A1), bei welcher der Rand in eine zum Verbindungsstift hin zeigende Richtung gewölbt ausgebildet ist.

Im Stand der Technik ist der Außendurchmesser einer Plattform häufig nur so viel größer als der Durchmesser des Verbindungsstiftes an seinem der zweiten Plattformoberfläche nahen Ende (Stiftdurchmesser) ausgebildet, wie es der Dicke der die Blindbohrung des Zahnimplantats bildenden Wandung im Bereich der Implantatschulter entspricht, sodass die Plattform bei mit dem Zahnimplantat verbundenem Aufsatz meist bündig an das Zahnimplantat anschließt (der Durchmesser des stiftförmigen Zahnimplantats ist natürlich an der Implantatschulter des stiftförmigen Zahnimplantats zu messen).

Gattungsgemäße Aufsatze gehen beispielsweise aus der WO 2011/089057 A1 und der EP 1 069 868 B1 (beide: Camlog Technologies AG) hervor.

Gattungsgemäße Aufsatze unterscheiden sich von sogenannten Gingivaformern durch das Vorsehen eines Retentionsstiftes zur Befestigung der Mesostruktur. Gingivaformer dienen hingegen nicht der Befestigung einer Mesostruktur sondern nur der temporären Formung der Gingiva.

Nach Implantation eines Zahnimplantats in den Kiefer eines Patienten und der Befestigung des Abutments am Zahnimplantat ist ein gutes Anwachsen von Zellen an das Zahnimplantat und das Abutment von größter Bedeutung. Untersuchungen haben gezeigt, dass es im Bereich des Zahnimplantats meist zu einem ausreichenden Zellwachstum kommt. Im Bereich des Abutments erfolgt das Ansiedeln von Zellen meist weniger zufriedenstellend.

Nach Implantation eines Zahnimplantats kann es vor allem im Bereich der Klebefuge - das ist jener Bereich, in welchem die Mesostruktur an die Plattform angrenzt - zu einer Ansiedlung von Bakterien kommen, die sich in den Bereich des Zahnimplantats hinein ausbreiten können.

Gattungsgemäße Plattformen sind ohne Berücksichtigung der Dimensionen jener Zähne eines Patienten, die benachbart an der Plattform zu befestigenden Mesostruktur sind, gestaltet, was die oben beschriebenen Nachteile noch verschärft.

Aufsatze mit den konstruktiven Merkmalen des Oberbegriffs des Anspruchs 1, jedoch zur unmittelbaren Befestigung einer Suprakonstruktion, gehen aus den Schriften US 2002/004189 A1, WO 01/49199 A2, US 2010/159419 A1 und US 2010/304334 A1 hervor.

Aufgabe der Erfindung ist die Bereitstellung eines Aufsatzes, einer Anordnung aus einem stiftförmigen Zahnimplantat und einem Aufsatz und eines Verfahrens zum Formen einer Plattform, welche das Anwachsen von Zellen verbessert und die Gefahr eines bakteriellen Befalls des Zahnimplantats verringert.

Diese Aufgabe wird durch einen Aufsatz mit den Merkmalen des Anspruchs 1, einer Anordnung aus einem solchen Aufsatz und einem stiftförmigen Zahnimplantat nach Anspruch 8 und einem Verfahren nach Anspruch 13 gelöst. Vorteilhafte Ausführungsformen der Erfindung sind in den abhängigen Ansprüchen definiert.

Das Abschirmen der Klebefuge vom Zahnimplantat erfolget dadurch, dass der Rand der Plattform in eine vom Verbindungsstift weg zeigende, koronale Richtung gewölbt ausgebildet ist.

Bei einem Ausführungsbeispiel der Erfindung ist vorgesehen, dass in einem mit dem korrespondierenden stiftförmigen Zahnimplantat verbundenen Zustand der Plattform die Plattform (in Draufsicht auf die zweite Plattformoberfläche) über das korrespondierende stiftförmige Zahnimplantat übersteht, sodass nach Anbringung der Mesostruktur an der Plattform die Klebefuge weiter vom Zahnimplantat weg verlagert wird, als beim Stand der Technik. Es kann sogar zu einem Abschirmen der Klebefuge vom Zahnimplantat durch die Plattform kommen. Dies verringert die Gefahr eines bakteriellen Befalls des Zahnimplantats. Außerdem stellt die Erfindung für das Anwachsen von Zellen (Epithelzellen und Bindegewebszellen) an die Plattform eine vergrößerte zweite Plattformoberfläche der Plattform bereit. Betrachtet man einen erfindungsgemäßen Aufsatz für sich in Isolation, dann erkennt man, dass in Draufsicht auf die zweite Plattformoberfläche der Durchmesser der Plattform zumindest über einen Teil des Gesamtwinkelbereichs wesentlich größer ist als der Stiftdurchmesser.

Bei einem Ausführungsbeispiel der Erfindung steht also die Plattform zumindest über einen Teil des Gesamtwinkelbereichs radial über das korrespondierende stiftförmige Zahnimplantat über. Mit anderen Worten ist der Durchmesser der Plattform über diesen Teil des Gesamtwinkelbereichs größer als der Durchmesser des korrespondierenden stiftförmigen Zahnimplantats im Bereich der Implantatschulter. Vorzugsweise ist der Durchmesser der Plattform 1 bis 4 Millimeter größer als der Durchmesser des korrespondierenden stiftförmigen Zahnimplantats an der Implantatschulter.

Durch den vergrößerten Durchmesser der Plattform (im Vergleich zum Stand der Technik) besteht außerdem die Möglichkeit einer Anpassung der Plattform an die Dimensionen der an der Plattform zu befestigenden Mesostruktur, an den benachbarten Zähne eines Patienten orientiert, indem überflüssiges Material der Plattform über Teile des Gesamtwinkelbereichs außerhalb des Körpers des Patienten durch Materialentfernung entfernt - zum Beispiel abgefräst - wird.

Wie beim Stand der Technik ist ein erfindungsgemäßer Aufsatz stets für ein bestimmtes korrespondierendes stiftförmiges Zahnimplantat (oder einer Äquivalenzklasse desselben) ausgebildet. Dies kann bei der Erfindung wie an sich bekannt durch eine entsprechende an dem Aufsatz angeordnete Markierung oder Codierung (z. B. eine Beschriftung oder Farbcodierung) oder eine entsprechende sinnfällige Herrichtung der Verpackung des Aufsatzes angezeigt werden.

Der Aufsatz kann aus metallischen (besonders bevorzugt Titan) oder keramischen Werkstoffen bestehen.

Um den Retentionsstift herum ist die erste Plattformoberfläche vorzugsweise als Ansetzschulter für die Mesostruktur ausgebildet. Wie an sich bekannt, kann der Aufsatz mit einer axial verlaufenden Durchgangsbohrung versehen sein, die sich durch den Verbindungsstift erstreckt und das Verschrauben des Aufsatzes mit dem Zahnimplantat gestattet.

Die zweite Plattformoberfläche kann sich entweder in Richtung des Verbindungsstifts fortlaufend auf den Stiftdurchmesser verjüngen oder der Übergang kann in Form einer Stufe erfolgen.

Bevorzugt ist eine Anordnung eines Aufsatzes mit einem stiftförmigen Zahnimplantat, welches das Platformswitching unterstützt, vorgesehen. Der Aufsatz und das Zahnimplantat sind besonders bevorzugt für ein Einzelzahnimplantat bzw. als Einzelzahnimplantat ausgebildet.

Es kann vorgesehen sein, dass am Verbindungsstift eine Bearbeitungshülse als Schutz des Verbindungsstiftes bei einem Bearbeitungsvorgang der Plattform angeordnet ist. Nach dem Bearbeitungsvorgang - zum Beispiel dem Sandstrahlen der Plattform - kann die Bearbeitungshülse vom Verbindungsstift entfernt werden.

Ein Aufsatz gemäß dem Stand der Technik samt Zahnimplantat ist in Figur 1 gezeigt. Die Figur 2 zeigt kein Ausführungsbeispiel der Erfindung. Verschiedene Ausführungsbeispiele der Erfindung werden anhand der Figuren 3 und 4 diskutiert.

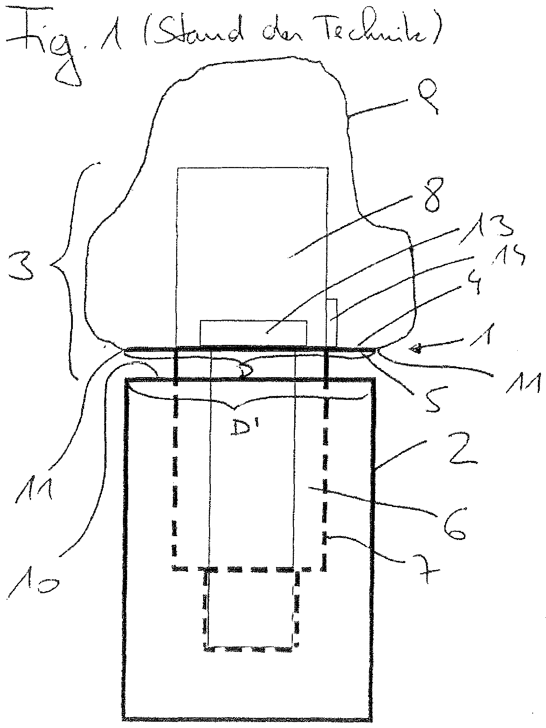

In Figur 1 a ist beispielhaft ein Aufsatz 1 (mit Platformswitching) gemäß dem Stand der Technik in einem die Mittellängsachse der Anordnung aufweisenden Schnitt dargestellt.

Der Aufsatz 1 weist eine Plattform 3 mit einer ersten Plattformoberfläche 4 und einer zweiten Plattformoberfläche 5 auf. Die Plattform 3 weist einen Durchmesser D auf. An der ersten Plattformoberfläche 4 ist ein Retentionsstift 8 (mit einer Verdrehsicherung 14) zur Befestigung einer Mesostruktur 9 angeordnet. An der zweiten Plattformoberfläche 5 ist ein Verbindungsstift 6 angeordnet.

Das korrespondierende stiftförmige Zahnimplantat 2 weist eine Blindbohrung 7 auf, deren Dimensionierung auf den Verbindungsstift 6 abgestimmt ist. Im Bereich der Implantatschulter 10 ist die Plattform 3 mit einem geringeren Durchmesser ausgebildet als das stiftförmige Zahnimplantat 2 (Platformswitching). In Draufsicht auf die zweite Plattformoberfläche 5 schließt die Plattform 3 bündig mit dem stiftförmigen Zahnimplantat ab, ihr Durchmesser D ist also gleich groß gewählt wie der Durchmesser D' des stiftförmigen Zahnimplantats 2. Der Abstand zwischen der Klebefuge 11 und dem stiftförmigen Zahnimplantat 2 ist sehr gering, was zu einem bakteriellen Befall des stiftförmigen Zahnimplantats 2 führen kann. Außerdem weist die zweite Plattformoberfläche 4 eine geringe Fläche für die gewünschte Ansiedlung von Zellen auf.

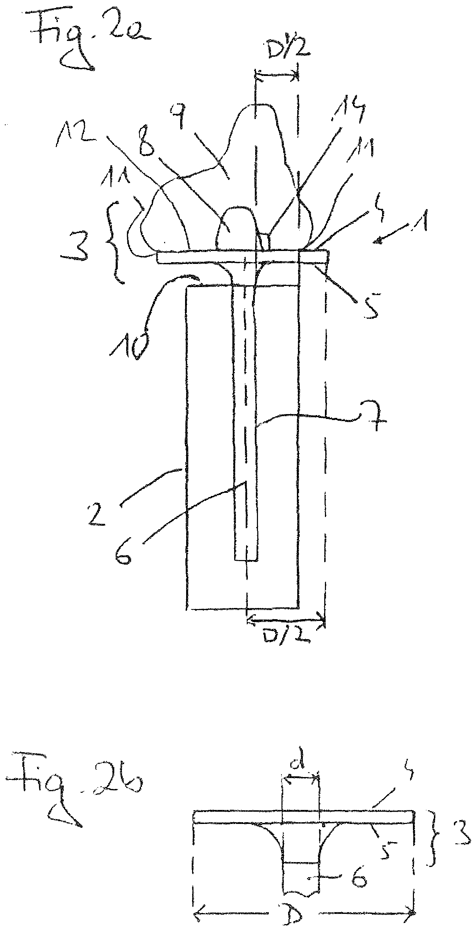

Die Figuren 2a und 2b zeigen kein Ausführungsbeispiel der Erfindung in einem die Mittellängsachse der Anordnung aufweisenden Schnitt.

Der Aufsatz 1 weist eine Plattform 3 mit einer ersten Plattformoberfläche 4 und einer zweiten Plattformoberfläche 5 auf. Die Plattform 3 ist im Bereich der ersten und der zweiten Plattformoberfläche 4, 5 mit einem kreisförmigen Umfang ausgebildet und weist einen Durchmesser D auf. An der ersten Plattformoberfläche 4 ist ein Retentionsstift 8 zur Befestigung einer Mesostruktur 9 angeordnet. An der zweiten Plattformoberfläche 5 ist ein Verbindungsstift 6 angeordnet. Um den Retentionsstift 8 herum ist die erste Plattformoberfläche 4 als Ansetzschulter 12 (ringförmig um den Retentionsstift 8 herum) für die Mesostruktur 9 ausgebildet. Wie an sich bekannt, kann der Aufsatz 1 mit einer axial verlaufenden Durchgangsbohrung versehen sein, die sich durch den Verbindungsstift 6 erstreckt und das Verschrauben des Aufsatzes 1 mit dem stiftförmigen Zahnimplantat 2 über eine Schraube 13 gestattet. Verbindungsstift 6 und Blindbohrung 7 können zumindest über einen Abschnitt ihrer Länge mit korrespondierenden Gewinden versehen sein.

Das korrespondierende stiftförmige Zahnimplantat 2 weist eine Blindbohrung 7 auf, deren Dimensionierung auf den Verbindungsstift 6 abgestimmt ist. Im Bereich der Implantatschulter 10 ist die Plattform 3 mit einem geringeren Durchmesser ausgebildet als das stiftförmige Zahnimplantat 2 (Platformswitching). In Draufsicht auf die zweite Plattformoberfläche 5 weist die Plattform 3 einen größeren Durchmesser D auf als das stiftförmige Zahnimplantat 2 im Bereich der Implantatschulter 10 (Durchmesser D'), daher steht die Plattform 3 über das korrespondierende stiftförmige Zahnimplantat 2 über. Die Klebefuge 11 wird durch die Plattform 3 vom stiftförmigen Zahnimplantat 2 abgeschirmt. Ein bakterieller Befall des stiftförmigen Zahnimplantats 2 wird so erschwert, wenn nicht sogar vermieden. Die zweite Plattformoberfläche 5 weist eine größere Fläche für die gewünschte Ansiedlung von Zellen auf.

Figur 2b zeigt in einer Detailansicht die Plattform 3 und das der zweiten Plattformoberfläche 5 nahe Ende des Verbindungsstiftes 6 (Retentionsstift 8 nicht dargestellt). Gezeigt ist das Verhältnis von Durchmesser D zu Stiftdurchmesser d.

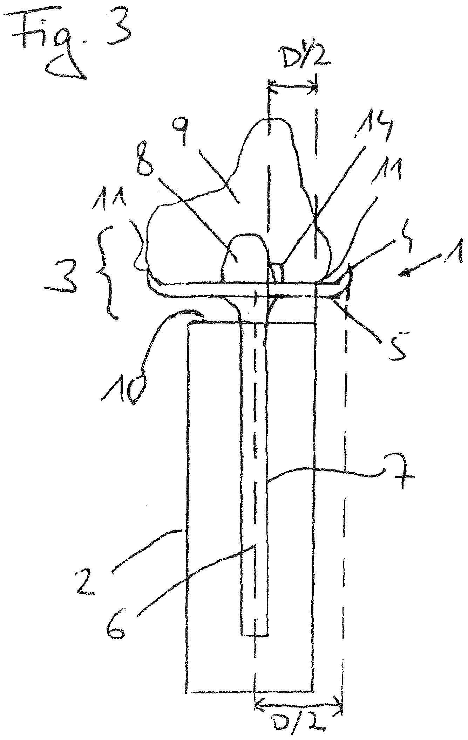

Die Figur 3 zeigt ein Ausführungsbeispiel der Erfindung in einem die Mittellängsachse der Anordnung aufweisenden Schnitt.

Das Ausführungsbeispiel der Figur 3 unterscheidet sich von jenem der Figur 2 nur dadurch, dass der Rand der Plattform 3 in eine vom Verbindungsstift 6 weg zeigende, das heißt koronale Richtung gewölbt ausgebildet ist, wodurch sich eine tellerartige Ausbildung der ersten Plattformoberfläche 4 ergibt (über den Gesamtwinkelbereich φ₁, φ₂, φ₃, φ₄). Außerdem verjüngt sich hier die Plattform 3 in Richtung ihres Randes (die durch den Abstand zwischen der ersten und der zweiten Plattformoberfläche 4, 5 gebildete Dicke der Plattform 3 ist am Rand der Plattform 3 geringer als im Zentrum der Plattform 3). Die Dicke der Plattform 3 vor dem Bereich, in welchem sie sich verjüngt, kann zum Beispiel 0,8 Millimeter betragen.

Diese beiden Maßnahmen (Aufwölbung und Verjüngung) könnten auch einzeln, d. h. unabhängig voneinander eingesetzt werden. Die Maßnahme der Aufwölbung kann auch unabhängig vom Durchmesser der Plattform eingesetzt werden.

Ansonsten ist der Aufsatz 1 genau so wie in Figur 2 ausgebildet. Aus Gründen der Übersichtlichkeit wurden aber nicht alle in Figur 2 dargestellten Details noch einmal in Figur 3 gezeigt.

Anders als in den Figuren 2 und 3 dargestellt, können gemäß der Erfindung auch Aufsatze 1 ohne Platformswitching zum Einsatz kommen. In diesem Fall würde die zweite Plattformebene 5 direkt (ohne den sich in Richtung des Verbindungsstiftes 6 verjüngenden Teil) an den Verbindungsstift 6 anschließen und an der Implantatschulter 10 aufliegen oder zumindest nur einen minimalen Abstand zu dieser aufweisen.

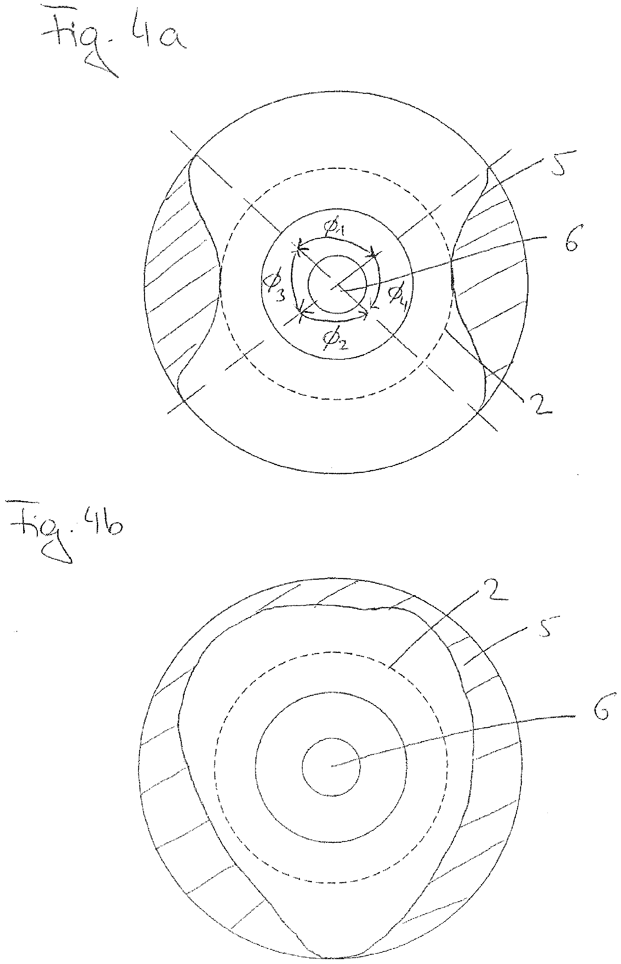

Die Figuren 4a und 4b zeigen einen Aufsatz 1 nach Figur 2 oder 3 in einer Draufsicht auf die zweite Plattformebene 5, wobei unter Berücksichtigung der Dimensionen der an der Plattform 3 zu befestigenden Mesostruktur 9 benachbarten Zähne eines Patienten jeweils unterschiedliche anatomische Anpassungen an der Plattform 3 vorgenommen wurden. Die jeweils schraffiert dargestellten Bereiche der Plattform 3 werden durch Materialabtragung entfernt. Vor der Materialabtragung sind die Plattformen 3 in Draufsicht auf die erste oder zweite Plattformoberfläche 4, 5 vorzugsweise mit einem kreisförmigen Umfang ausgebildet.

So ergeben sich Plattformen 3, bei denen der Durchmesser D der Plattform 3 nur über einen Teil φ₁, φ₂ des Gesamtwinkelbereichs φ₁, φ₂, φ₃, φ₄ (φ₁+ φ₂ + φ₃ + φ₄ = 360°) so groß ist, dass in einem mit dem korrespondierenden stiftförmigen Zahnimplantat 2 verbundenen Zustand des Aufsatzes 1 die Plattform 3 in Draufsicht auf die zweite Plattformoberfläche 5 über das korrespondierende stiftförmige Zahnimplantat 2 übersteht. In den Bereichen φ₃, φ₄ des Gesamtwinkelbereichs φ₁, φ₂, φ₃, φ₄ schließt die Plattform 3 in Draufsicht auf die zweite Plattformoberfläche 5 bündig mit dem stiftförmigen Zahnimplantat 2 ab.

Anders als dargestellt, muss der Retentionsstift 8 mit der ersten Plattformoberfläche 4 nicht zwingend einen rechten Winkel einschließen.

Der Materialabtrag könnte natürlich auch so gewählt werden, dass der Durchmesser D der Plattform 3 über den Gesamtwinkelbereich φ₁, φ₂, φ₃, φ₄ so groß verbleibt, dass in einem mit dem korrespondierenden stiftförmigen Zahnimplantat 2 verbundenen Zustand des Aufsatzes 1 die Plattform 3 in Draufsicht auf die zweite Plattformoberfläche 5 über das korrespondierende stiftförmige Zahnimplantat 2 übersteht, aber je nach Winkelbereich unterschiedlich weit.

## Patentansprüche

1. Aufsatz (1) für ein korrespondierendes stiftförmiges Zahnimplantat (2), mit:
- einer Plattform (3),
die eine erste Plattformoberfläche (4) und eine zweite Plattformoberfläche (5) aufweist,
- einem an der ersten Plattformoberfläche (4) angeordneten Retentionsstift (8) zur Befestigung einer Mesostruktur (9),
- einem Verbindungsstift (6) zum Verbinden der Plattform (3) mit einem eine mit dem Verbindungsstift (6) korrespondierende Blindbohrung (7) aufweisenden, stiftförmigen Zahnimplantat (2),
**dadurch gekennzeichnet, dass** der Rand der Plattform (3) in eine vom Verbindungsstift (6) weg zeigende, koronale Richtung gewölbt ausgebildet ist, sodass sich eine tellerartige Ausbildung der ersten Plattformoberfläche (4) ergibt.

2. Aufsatz (1) nach Anspruch 1, wobei der Verbindungsstift (6) an einem der zweiten Plattformoberfläche (5) nahen Ende einen Stiftdurchmesser (d) aufweist, **dadurch gekennzeichnet, dass** der Durchmesser (D) der Plattform (3) zumindest über einen Teil (φ₁, φ₂) des Gesamtwinkelbereichs (φ₁, φ₂, φ₃, φ₄) wesentlich größer ist als der Stiftdurchmesser (d), nämlich dass das Verhältnis (D/d) von Durchmesser (D) der Plattform (3) zu Stiftdurchmesser (d) größer als 2, vorzugsweise größer als 3, bevorzugt jeweils kleiner als 18 ist.

3. Aufsatz (1) nach wenigstens einem der Ansprüche 1 bis 2, **dadurch gekennzeichnet, dass** die Plattform (3) und der Verbindungsstift (6) einstückig ausgebildet sind.

4. Aufsatz (1) nach wenigstens einem der Ansprüche 1 bis 3, **dadurch gekennzeichnet, dass** der Aufsatz (1) aus Titan besteht.

5. Aufsatz (1) nach wenigstens einem der Ansprüche 1 bis 4, **dadurch gekennzeichnet, dass** die durch den Abstand zwischen der ersten und der zweiten Plattformoberfläche (4, 5) der Plattform (3) gebildete Dicke der Plattform (3) am Rand der Plattform (3) geringer ist als im Zentrum der Plattform (3).

6. Aufsatz (1) nach wenigstens einem der Ansprüche 1 bis 5, **dadurch gekennzeichnet, dass** zumindest die Plattform (3) und der Retentionsstift (8), vorzugsweise auch der Verbindungsstift (6) einstückig ausgebildet sind.

7. Aufsatz (1) nach wenigstens einem der Ansprüche 1 bis 6, **dadurch gekennzeichnet, dass** am Verbindungsstift (6) eine Bearbeitungshülse als Schutz bei einem Bearbeitungsvorgang der Plattform (3) angeordnet ist.

8. Anordnung mit:
- einem stiftförmigen Zahnimplantat (2), das eine Blindbohrung (7) aufweist,
- einem Aufsatz (1) nach wenigstens einem der Ansprüche 1 bis 7, wobei der Verbindungsstift (6) in die Blindbohrung (7) eingesetzt ist.

9. Anordnung nach Anspruch 8, wobei am Aufsatz (1) eine Mesostruktur (9) befestigt ist.

10. Anordnung nach Anspruch 8 oder 9, wobei
sich die Plattform (3) in Draufsicht auf die zweite Plattformoberfläche (5) über einen Gesamtwinkelbereich (φ₁, φ₂, φ₃, φ₄) von 360° erstreckt und einen Durchmesser (D) aufweist,
**dadurch gekennzeichnet, dass** der Durchmesser (D) der Plattform (3) zumindest über einen Teil (φ₁, φ₂) des Gesamtwinkelbereichs (φ₁, φ₂, φ₃, φ₄) so groß ist, dass in einem mit dem korrespondierenden stiftförmigen Zahnimplantat (2) verbundenen Zustand des Aufsatzes (1) die Plattform (3) in Draufsicht auf die zweite Plattformoberfläche (5) über das korrespondierende stiftförmige Zahnimplantat (2) übersteht.

11. Anordnung nach wenigstens einem der Ansprüche 8 bis 10, **dadurch gekennzeichnet, dass** in einem mit dem korrespondierenden stiftförmigen Zahnimplantat (2) verbundenen Zustand des Aufsatzes (1) die Plattform (3) in Draufsicht auf die zweite Plattformoberfläche (5) über den Gesamtwinkelbereich (φ₁, φ₂, φ₃, φ₄) über das korrespondierende stiftförmige Zahnimplantat (2) übersteht.

12. Anordnung nach wenigstens einem der Ansprüche 8 bis 10, **dadurch gekennzeichnet, dass** in Draufsicht auf die zweite Plattformoberfläche (5) der Durchmesser (D) der Plattform (3) über den Gesamtwinkelbereich (φ₁, φ₂, φ₃, φ₄) nirgends kleiner ist als der Durchmesser (D') des stiftförmigen Zahnimplantats (2) an der Implantatschulter (10).

13. Verfahren zum anatomischen Anpassen eines Aufsatzes (1) nach wenigstens einem der Ansprüche 1 bis 7, wobei eine Anpassung der Plattform (3) an die Dimensionen der an der Plattform (3) zu befestigenden Mesostruktur (9), an den benachbarten Zähnen eines Patienten orientiert, erfolgt, indem der Durchmesser (D) der Plattform (3) über wenigstens einen Teil (φ₃, φ₄) des Gesamtwinkelbereichs (φ₁, φ₂, φ₃, φ₄) außerhalb des Körpers des Patienten durch Materialentfernung verkleinert wird.

## Claims

1. Top piece (1) for a corresponding pin shaped dental implant (2) with:
- a platform (3) which features a first platform surface (4) and a second platform surface (5),
- a retention pin (8), mounted on the first platform surface (4), for the fastening of a mesostructure (9),
- a connecting pin (6) for the connection of the platform (3) with the blind bore (7) of a pin shaped dental implant (2) which features a blind bore (7) corresponding to the connecting pin (6), **characterized in that** the edge of the platform (3) is bulged in a coronal direction oriented away from the connecting pin (6), such that a plate-like formation of the first platform surface (4) results.

2. Top piece (1) according to claim 1, wherein the connecting pin (6) features a pin diameter (d) in the vicinity of an end of the second platform surface (5), **characterized by** the fact, that the diameter (D) of the platform (3) is at least over a part (φ1, φ2) of the total angular area (φ1, φ2, φ3, φ4) significantly larger than the pin diameter (d), namely the ratio of (D/d) of the diameter (D) of the platform (3) to the diameter of the pin (d) is larger than 2, preferably larger than 3, preferentially smaller than 18.

3. Top piece (1) according to at least one of claims 1 to 2, **characterized by** the fact, that the platform (3) and the connecting pin (6) are formed as one piece.

4. Top piece (1) according to at least one of claims 1 to 3, **characterized by** the fact that the top piece (1) is made out of titan.

5. Top piece (1) according to at least one of claims 1 to 4, **characterized by** the fact, that the thickness of the platform (3), created by the distance between the first and the second platform surface (4, 5) of the platform (3), is smaller at the edge of the platform (3) than in the center of the platform (3).

6. Top piece (1) according to at least one of claims 1 to 5, **characterized by** the fact, that at least the platform (3) and the retention pin (8), preferably also the connecting pin (6) are formed as one piece.

7. Top piece (1) according to at least one of claims 1 to 6, **characterized by** the fact, that a processing sleeve is placed onto the connecting pin (6) as a protection during processing of the platform (3).

8. Arrangement with:
- a pin shaped dental implant (2), that features a blind bore (7),
- a top piece (1) according to at least one of claims 1 to 7, wherein the connecting pin (6) is inserted in the blind bore (7).

9. Arrangement according to claim 8, wherein a mesostructure (9) is mounted onto the top piece (1).

10. Arrangement according to claim 8 or 9, wherein the platform (3) in a view from above onto the second platform surface (5) extends over the total angular area (φ1, φ2, φ3, φ4) of 360° and features a diameter (D), **characterized in that** the diameter (D) of the platform (3) is large enough, at least over a part (φ1, φ2) of the total angular area (φ1, φ2, φ3, φ4), that in a state in which a top piece (1) is connected with a corresponding pin shaped dental implant (2), in a view from above onto the second platform surface (5), the platform (3) protrudes over the corresponding pin shaped dental implant (2).

11. Arrangement according to at least one of claims 8 to 10 **characterized in that**, in a state in which the top piece (1) is connected to a corresponding pin shaped dental implant (2), in a view from above onto the second platform surface (5) the platform (3), protrudes over the corresponding pin shaped dental implant (2) over the total angular area (φ1, φ2, φ3, φ4).

12. Top piece (1) according to at least one of claims 8 to 10, **characterized by** the fact, that in a view from above onto the second platform surface (5), the diameter (D) of the platform (3) is nowhere smaller than the diameter (D') of the pin shaped dental implant (2) at the implant shoulder (10) over the entire angular area (φ1, φ2, φ3, φ4).

13. Method for the anatomic adaptation of a top piece (1) according to at least one of claims 1 to 7, wherein an adaptation of the platform (3) to the dimensions of the mesostructure (9) to be connected to the platform (3), oriented at the adjoining teeth of a patient, is being done by reducing in size the diameter (D) of the platform (3) at least over a part (φ3, φ4) of the total angular area (φ1, φ2, φ3, φ4) outside the body of the patient, by removing material..

## Revendications

1. Garniture (1) pour un implant dentaire en forme de broche correspondant (2) avec :
- une plateforme (3), qui présente une première surface de plateforme (4) et une deuxième surface de plateforme (5),
- une broche de rétention (8) disposée sur la première surface de plateforme (4) pour la fixation d'une méso-structure (9),
- une broche de liaison (6) pour relier la plateforme (3) à un implant dentaire (2) en forme de broche, présentant un alésage borgne (7) correspondant à la broche de liaison (6),
**caractérisée en ce que** le bord de la plateforme (3) est conçu courbe dans un sens coronal, orienté à distance de la broche de liaison (6), de sorte qu'il en résulte une conception en forme d'assiette de la première surface de plateforme (4).

2. Garniture (1) selon la revendication 1, dans laquelle la broche de liaison (6) présente, à une extrémité proche de la deuxième surface de plateforme (5), un diamètre de broche (d), **caractérisée en ce que** le diamètre (D) de la plateforme (3) au moins sur une partie (Ø₁, Ø₂) de la zone angulaire globale (Ø₁, Ø_{2,} Ø₃, Ø₄) est essentiellement plus grand que le diamètre de broche (d), à savoir **en ce que** le rapport (D/d) du diamètre (D) de la plateforme (3) au diamètre de la broche (d) est supérieur à 2, de préférence supérieur à 3, de préférence à chaque fois inférieur à 18.

3. Garniture (1) selon au moins l'une des revendications 1 à 2, **caractérisée en ce que** la plateforme (3) et la broche de liaison (6) sont conçues d'une seule pièce.

4. Garniture (1) selon au moins l'une des revendications 1 à 3, **caractérisée en ce que** la garniture (1) se compose de titane.

5. Garniture (1) selon au moins l'une des revendications 1 à 4, **caractérisée en ce que** l'épaisseur de la plateforme (3), formée par l'intervalle entre la première et la deuxième surface de plateforme (4, 5) de la plateforme (3), est moindre sur le bord de la plateforme (3) qu'au centre de la plateforme (3).

6. Garniture (1) selon au moins l'une des revendications 1 à 5, **caractérisée en ce qu'**au moins la plateforme (3) et la tige de rétention (8), de préférence aussi la broche de liaison (6), sont conçues d'une seule pièce.

7. Garniture (1) selon au moins l'une des revendications 1 à 6, **caractérisée en ce que** sur la broche de liaison (6) est disposée une enveloppe de traitement comme protection lors d'un processus de traitement de la plateforme (3).

8. Garniture avec :
- un implant dentaire en forme de broche (2), qui présente un alésage borgne (7),
- une garniture (1) selon au moins l'une des revendications 1 à 7, dans laquelle la broche de liaison (6) est insérée dans l'alésage borgne (7).

9. Dispositif selon la revendication 8, dans lequel une méso-structure (9) est fixée sur la garniture (1).

10. Dispositif selon la revendication 8 ou 9, dans lequel la plateforme (3) en vue de dessus s'étend sur la deuxième surface de plateforme (5) sur une zone angulaire globale (Ø₁, Ø_{2,} Ø₃, Ø₄) de 360° et présente un diamètre (D), **caractérisé en ce que** le diamètre (D) de la plateforme (3) au moins sur une partie (Ø₁, Ø₂) de la zone angulaire globale (Ø₁, Ø_{2,} Ø₃, Ø₄) est si grand que dans un état de la garniture (1) relié à l'implant dentaire en forme de broche correspondant (2), la plateforme (3) en vue de dessus avance sur la deuxième surface de plateforme (5) au-dessus de l'implant dentaire en forme de broche (2) correspondant.

11. Dispositif selon au moins l'une des revendications 8 à 10, **caractérisé en ce que** dans un état de la garniture (1) relié à l'implant dentaire en forme de broche correspondant (2), la plateforme (3) en vue de dessus avance sur la deuxième surface de plateforme (5) sur la zone angulaire globale (Ø₁, Ø_{2,} Ø₃, Ø₄) au-dessus de l'implant dentaire (2) en forme de broche correspondant.

12. Dispositif selon au moins l'une des revendications 8 à 10, **caractérisé en ce qu'**en vue de dessus sur la deuxième surface de plateforme (5), le diamètre (D) de la plateforme (3) sur la zone angulaire globale (Ø₁, Ø_{2,} Ø₃, Ø₄) n'est nulle part inférieur au diamètre (D') de l'implant dentaire en forme de broche (2) sur l'épaulement d'implant (10).

13. Procédé pour l'adaptation anatomique d'une garniture (1) selon au moins l'une des revendications 1 à 7, dans lequel a lieu une adaptation de la plateforme (3) aux dimensions de la méso-structure (9) à fixer sur la plateforme (3), orientée sur les dents voisines d'un patient, tandis que le diamètre (D) de la plateforme (3) est réduit par enlèvement de matière sur au moins une partie (Ø₃, Ø₄) de la zone angulaire globale (Ø₁, Ø_{2,} Ø₃, Ø₄) hors du corps du patient.
